(19) Europäisches Patentamt
European Patent Office
Office européen des brevets

(11) Numéro de publication: **0 355 073 B1**

(12) ## FASCICULE DE BREVET EUROPEEN

(45) Date de publication de fascicule du brevet: **06.10.93** (51) Int. Cl.5: **H04L 7/04**

(21) Numéro de dépôt: **89402274.8**

(22) Date de dépôt: **11.08.89**

(54) **Procédé de synchronisation et dispositifs de récupération de synchronisation pour communications à l'alternat.**

(30) Priorité: **19.08.88 FR 8811038**

(43) Date de publication de la demande:
**21.02.90 Bulletin 90/08**

(45) Mention de la délivrance du brevet:
**06.10.93 Bulletin 93/40**

(84) Etats contractants désignés:
**DE GB IT NL SE**

(56) Documents cités:
**US-A- 3 959 587**
**US-A- 4 002 834**

(73) Titulaire: **FRANCE TELECOM**
**6, Place d'Alleray**
**F-75015 Paris(FR)**

(72) Inventeur: **Abiven, Jacques**
**Coat Mael**
**Vieux Marché**
**F-22420 Plouaret(FR)**
Inventeur: **Ramel, Gilles**
**rue du Park Moan**
**Brélevenez**
**F-22300 Lannion(FR)**

(74) Mandataire: **Cabinet Martinet & Lapoux**
**BP 405**
**F-78055 Saint Ouentin en Yvelines Cédex**
**(FR)**

EP 0 355 073 B1

# Description

La présente invention concerne de manière générale la synchronisation de signaux numériques dans des liaisons de communication. Plus particulièrement l'invention concerne la synchronisation de signaux numériques de paquets et de trames de paquets dans des liaisons de communication à l'alternat notamment par fibres optiques.

La transmission à l'alternat de signaux de communication est une solution intéressante pour des réseaux de télécommunications par fibres optiques. Cette solution autorise en effet l'utilisation d'une même fibre optique pour deux sens de transmission et pour plusieurs communications d'abonné et permet ainsi de rentabiliser au mieux la capacité très importante de la fibre.

Dans une communication à l'alternat, par exemple entre un central téléphonique et une installation d'abonné, la liaison entre le central et l'installation d'abonné n'est pas permanente et il est nécessaire de récupérer la synchronisation au début de chaque période de communication. Afin d'obtenir un bon confort d'écoute pour la communication, la récupération de la synchronisation appelée également récupération de verrouillage de trame dans les réseaux de télécommunications de type RNIS, doit être réalisée de manière extrêmement rapide, généralement en moins de 10 millisecondes.

Les dispositifs connus de récupération de verrouillage de trame sont généralement conçus pour des communications bidirectionnelles de type duplex. Dans ces dispositifs, le verrouillage de trame est déclaré acquis, à l'établissement d'une communication, après plusieurs réceptions successives d'un motif particulier de verrouillage de trame ce qui entraîne un temps de récupération du verrouillage de trame relativement important. De tels dispositifs sont donc inadaptés pour une récupération rapide du verrouillage de trame dans une communication à l'alternat.

Le document US-A-4 002 834 décrit un système de synchronisation dans lequel des paquets de données de n bits à transmettre par une extrémité de transmission sont "empaquetés". Un bit de début de paquet à l'état "1" précède chaque paquet, et (n + 1) bits à l'état "0" succèdent à chaque paquet. Une extrémité de réception détecte chaque bit à l'état "1" pour produire une impulsion de trame dont la durée est égale à la durée d'un paquet de données. Cette impulsion de trame interdit tout autre verrouillage de trame pendant sa durée. Les (n + 1) bits à l'état "0" sont prévus dans le "cas extrême" où un verrouillage de trame incorrect se produit pour le dernier bit d'un paquet de données, en permettant qu'un verrouillage de trame correct puisse être effectué sur le paquet de données suivant. Le système décrit ne préconise pas l'utilisation des (n + 1) bits à l'état "0" à des fins de synchronisation, permettant à l'extrémité de réception de confirmer qu'un bit à l'état "1" détecté constitue bien un bit de début de paquet de données, compte tenu de la périodicité des paquets de données transmis.

La présente invention vise à fournir un procédé de synchronisation et un dispositif de récupération de synchronisation destinés aux communications à l'alternat et tirant avantage d'une forme d'onde particulière des signaux de communication à l'alternat afin d'introduire dans lesdits signaux des mots de synchronisation de grande longueur à partir desquels une récupération de la synchronisation est obtenue très rapidement et avec une bonne fiabilité.

A cette fin, le procédé selon l'invention pour synchroniser un signal de communication dans une liaison bidirectionnelle à l'alternat est tel que défini dans la revendication 1.

Un dispositif de récupération de synchronisation selon l'inventions est tel que défini dans la revendication 2.

Selon une caractéristique de l'invention, le dispositif de récupération de synchronisation comprend également des moyens reliés aux moyens pour établir pour signaler une anomalie dans la synchronisation après un nombre prédéterminé de défauts de détection successifs du mot de synchronisation.

Selon l'invention le mot de synchronisation du fait de sa grande longueur est pratiquement inimitable et la synchronisation est récupérée avec une bonne fiabilité après une seule détection du mot de synchronisation.

D'autres avantages et caractéristiques de l'invention apparaîtront plus clairement à la lecture de la description suivante du procédé de synchronisation et de plusieurs réalisations préférées d'un dispositif de récupération de synchronisation selon l'invention en référence aux dessins annexés correspondants dans lesquels :
- la Fig. 1 montre une forme d'onde d'un signal numérique de communication à l'alternat ; et
- la Fig. 2 montre le schéma de principe d'un dispositif de récupération de synchronisation selon l'invention.

Dans un équipement d'extrémité de transmission-réception dans une liaison à l'alternat, un dispositif de récupération de synchronisation selon l'invention est situé en aval d'un dispositif de duplexage ayant un port bidirectionnel relié au support de transmission de la liaison, tel que fibre optique, pour transmettre et recevoir en alternat des signaux numériques tels par exemple que des paquets ou des trames numériques, une entrée recevant un signal numérique sortant par le port pour être transmis dans le support de transmission, et une sortie délivrant un signal numérique entrant par le port et en provenance du support de transmission.

Il est considéré une transmission à l'alternat ayant par exemple une période de répétition $TR = 500\ \mu s$ et une fréquence de transmission de bits $Fb = 5{,}120$ MHz pour transmettre des trames numériques de longueur $L = 1024$ bits.

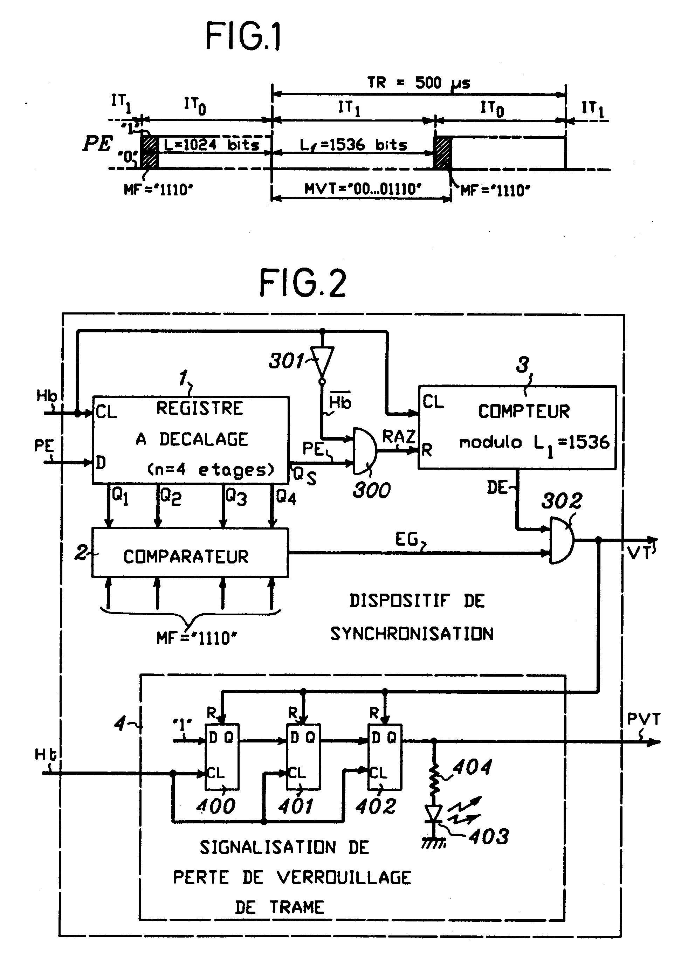

En référence à la Fig. 1, le signal numérique entrant PE présente des premiers et seconds intervalles temporels alternés $IT_0$ et $IT_1$ respectivement de longueurs $L = 1024$ bits et $L_1 = 1536$ bits. La période de répétition TR correspond donc à une longueur de $L + L_1 = 2560 = 5{,}120 \times 500$ bits. Les intervalles temporels $IT_0$ contiennent chacun une trame entrante en provenance du support de transmission. Pendant les intervalles temporels $IT_1$, l'équipement d'extrémité de transmission-réception dans lequel est inclus le dispositif de récupération de synchronisation, est dans une phase de transmission d'une trame sortante. Le signal numérique entrant PE a consécutivement pendant toute la durée des intervalles $IT_1$ une valeur constante, par exemple une valeur nulle à laquelle correspond un état logique "0". Les intervalles temporels $IT_1$ sont appelés par la suite intervalles temporels vides. Les intervalles vides $IT_1$ ont une longueur $L_1 = 1536$ bits supérieure à la longueur $L = 1024$ bits des intervalles temporels $IT_0$ du fait d'une durée de garde qui est prévue entre la fin de la transmission d'une trame sortante et la commutation du sens de communication pour la réception d'une trame entrante.

Selon le procédé de l'invention, les intervalles temporels vides $IT_1$ sont utilisés pour la synchronisation. Un intervalle vide $IT_1$ est associé à un motif déterminé MF placé au début de la trame de bits de données succédant à l'intervalle $IT_1$, pour constituer un mot de synchronisation ou mot de verrouillage de trame MVT. Le motif MF comprend un premier bit à l'état "1", soit à un état complémentaire à l'état "0" correspondant aux intervalles vides $IT_1$. Le motif MF a une longueur relativement très faible par exemple égale à $n = 4$ bits. Le motif MF est par exemple constitué de la combinaison binaire "1110". Au mot de verrouillage de trame MVT correspond donc la combinaison binaire "00....01110″ comprenant une séquence de $L_1 = 1536$ bits à l'état "0" suivie du motif $MF = "1110"$.

En référence à la Fig. 2, le dispositif de récupération de synchronisation selon l'invention comprend essentiellement un registre à décalage 1, un comparateur de mots 2, un compteur binaire 3 et un circuit de signalisation de perte de verrouillage de trame 4.

Le registre à décalage 1 comprend $n = 4$ étages. Il reçoit le signal de paquet entrant PE à une entrée de données D et un signal de rythme de transmission de bits Hb de fréquence $Fb = 5{,}120$ MHz à une entrée d'horloge CL. Quatre sorties parallèles de données Q1 à Q4 du registre 1 sont respectivement reliées à quatre premières entrées du comparateur 2. Une sortie série de données QS du registre 1 délivre le signal de paquet PE retardé de $n = 4$ éléments binaires.

Le comparateur 2 a pour fonction de détecter dans le signal PE le motif $MF = "1110"$ lorsque celui-ci est chargé dans le registre à décalage 1. Quatre secondes entrées du comparateur 2 reçoivent respectivement les $n = 4$ bits du motif MF qui sont mémorisés par exemple dans une mémoire morte câblée. Le comparateur 2 délivre en sortie un signal EG à l'état "1" lorsque le' motif MF est détecté dans le signal PE.

Le compteur binaire 3 est un compteur modulo $L_1$-1536. Le compteur 3 a pour fonction de détecter les intervalles temporels vides $IT_1$ dans le signal PE. A cette fin, le compteur 3 reçoit le signal de rythme Hb à une entrée d'horloge CL et un signal de remise à zéro RAZ à une entrée d'initialisation R. Un signal d'indication de débordement DE à l'état "1" est fourni par le compteur 3 lorsqu'une séquence d'au moins $L_1$-1536 bits consécutifs est détectée dans le signal PE.

Le signal de remise à zéro RAZ est produit par une porte logique ET à deux entrées 300 recevant le signal PE sortant du registre 1 et un signal de rythme complémentaire $\overline{Hb}$. Le signal $\overline{Hb}$ est produit par un inverseur logique 301 à partir du signal de rythme Hb.

Une autre porte logique ET à deux entrées 302 est prévue dans le dispositif afin de produire un signal de verrouillage de trame VT à partir des signaux EG et DE.

Les chargements et décalages des bits du signal PE dans le registre 1 sont commandés par des états "1" du signal de rythme Hb intervenant pendant des premières demi-périodes du signal Hb ayant une durée égale à $1/(2.Fb)$. La remise à zéro du compteur 3 est commandée par des bits à l'état "1" du signal PE contenus dans les intervalles temporels $IT_0$ et cela pendant des secondes demi-périodes du signal de rythme Hb correspondant à des états "0" dudit signal Hb.

Après la transmission par la sortie série QS du registre 1 du dernier bit des $L_1 = 1536$ bits à l'état "0" contenus dans un intervalle temporel vide $IT_1$, le signal RAZ est resté à l'état inactif "0" pendant au moins une durée égale à $IT_1$. Le compteur 3 a alors compté au moins $L_1 = 1536$ impulsions du signal de rythme Hb et est en débordement. Le signal DE est donc à l'état "1". Lorsque le premier bit à l'état "1" du motif $MF = "1110"$ est fourni par la sortie série QS du registre 1, en réponse à un front montant du signal Hb, tous les bits du motif MF sont chargés dans le registre 1 et le signal EG délivré par le comparateur 2 vient à l'état "1". Le signal de verrouillage de trame VT = DE.EG commute également à l'état "1". A l'issue d'une durée égale à $1/(2.Fb)$ après le transfert du premier bit du motif MF par la sortie série QS du registre 1 et la commutation du signal EG à l'état "1", le signal $\overline{Hb}$ vient à l'état "1" et ouvre la porte 300. Le signal de remise à zéro RAZ commute consécutivement à l'état "1" et remet le compteur 3 à zéro. Le signal DE vient à l'état "0", la porte 302 se ferme, et le signal de verrouillage de trame VT revient à l'état "0". Une détection du mot de verrouillage de trame MVT dans le signal numérique entrant est donc signalée par une impulsion à l'état "1" de durée égale à $1/(2.Fb)$ apparaissant dans le signal VT.

Le circuit de signalisation de perte de verrouillage de trame 4 a pour fonction de signaler une perte de verrouillage de trame après par exemple $m = 3$ défauts de détection consécutifs du mot de verrouillage de trame MVT. Le circuit 4 comprend essentiellement $m = 3$ bascules analogues 400 à 402 connectées en cascade.

Les $m = 3$ bascules sont de préférence de type D. A une entrée de données D de la première bascule 400 est appliqué un état "1". Les entrées de données D des bascules 401 et 402 sont reliées respectivement à des sorties de données Q des bascules 400 et 401. Des entrées de remise à zéro R des bascules 400 à 402 reçoivent les impulsions à l'état "1" du signal de verrouillage de trame VT. Un signal de rythme de trame Ht de période $Tt = TR = 500 \mu s$ est appliqué à des entrées d'horloge CL des bascules 400 à 402.

L'état "1" appliqué à l'entrée de données D de la bascule 400 ne traverse les $m = 3$ bascules 400 à 402 pour être délivré par la sortie de données Q de la bascule 402 et produire un signal de perte de verrouillage de trame PVT à l'état "1" qu'après au moins $m = 3$ impulsions successives à l'état "1" manquantes dans le signal de verrouillage de trame VT, c'est-à-dire après au moins $m = 3$ défauts de détection du mot de verrouillage de trame MVT.

Une diode électroluminescente 403 alimentée par le signal PVT à travers une résistance 404 est prévue dans le circuit 4 afin de produire une alarme visuelle en cas de perte du verrouillage de trame.

**Revendications**

1. Procédé pour synchroniser un signal de communication (PE) dans une liaison bidirectionnelle à l'alternat, ledit signal (PE) comprenant des premiers intervalles temporels $(IT_0)$ oc-cupés par des informations utiles et des seconds intervalles temporels $(IT_1)$ vides d'informations utiles et à un premier état logique déterminé ("0"), selon lequel,

dans une extrémité de la liaison pour transmettre ledit signal dans la liaison, un motif numérique de synchronisation prédéterminé (MF) est inclus au début de chacun des premiers intervalles temporels $(IT_0)$ contenant au moins un bit ayant un état logique complémentaire au dit premie état logique, caractérisé en ce que

dans une autre extrémité de la liaison pour recevoir ledit signal de la liaison, ledit motif (MF) est considéré comme associé aux seconds intervalles temporels $(IT_1)$, avec lesquels il constitue des mots de synchronisation (MVT) qui sont détectés dans le signal de communication (PE) afin de récupérer la synchronisation du signal (PE).

2. Dispositif de récupération de synchronisation pour la mise en oeuvre du procédé conforme à la revendication 1 et inclus dans ladite autre extrémité recevant ledit signal comprenant des moyens (1, 2) pour détecter le motif de synchronisation (MF) dans le signal de communication (PE), caractérisé en ce qu'il comprend

des moyens (3, 300, 301) pour détecter dans le signal de communication (PE), des séquences de bits au premier état logique ("0") de durée au moins égale à la durée $(L_1)$ des seconds intervalles temporels $(IT_1)$, et

des moyens (302) connectés aux moyens pour détecter (1, 2; 3, 300, 301) pour établir une impulsion de synchronisation (VT) lorsque ledit motif de synchronisation (MF) est détecté immédiatement après l'une desdites séquences de bits.

3. Dispositif conforme à la revendication 2, caractérisé en ce qu'il comprend, en outre, des moyens (4) reliés aux moyens pour établir (302) pour signaler une anomalie dans la synchronisation après un nombre prédéterminé $(m = 3)$ de défauts de détection successifs du mot de synchronisation (MVT).

4. Dispositif conforme à la revendication 2 ou 3, caractérisé en ce que les premiers moyens pour détecter comprennent un compteur binaire (3) qui est incrémenté par des impulsions d'un signal de rythme de bits (Hb) correspondant au signal de communication (PE) et est remis à zéro par des bits contenus dans les premiers intervalles temporels $(IT_0)$ et à un second état logique ("1") complémentaire audit premier état logique ("0").

## Claims

1. Method for synchronizing a communication signal (PE) in a half-duplex bidirectional link, said signal (PE) comprising first time intervals ($IT_0$) being occupied by useful data, and second time intervals ($IT_1$) being devoid of useful data and in a first given logic state ("0"), in which

in one end of the link for transmitting said signal in the link, a predetermined digital synchronization pattern (MS) is included at the beginning of each of the first time intervals ($IT_0$) comprising at least one bit having a logic state complementary to said first logic state, characterized in that

in another end of the link for receiving said signal from the link, said pattern (MF) is considered as in association with the second time intervals ($IT_1$) with which it constitutes synchronization words (MVT) which are detected in the communication signal (PE) thereby recovering the synchronization of the signal (PE).

2. Synchronization recovering device for carrying out the method according to claim 1 and included in said other end receiving said signal, comprising means (1, 2) for detecting the synchronization pattern (MF) in the communication signal (PE), characterized in that it comprises

means (3, 300, 301) for detecting in the communication signal (PE), sequences of bits in the first logic state ("0") with duration equal to at least the duration ($L_1$) of the second time intervals ($IT_1$), and

means (302) connected to the detecting means (1, 2 ; 3, 300, 301) for deriving a synchronization pulse (VT) when said synchronization pattern (MF) is detected immediately after one of said bit sequences.

3. Device according to claim 2, characterized in that it further comprises means (4) connected to the deriving means (302) for signalling a synchronization anomaly after a predetermined number (m = 3) of successive failures to detect the synchronization word (MVT).

4. Device according to claim 2 or 3, characterized in that the first detecting means comprise a binary counter (3) which is incremented by pulses of a bit rate signal (Hb) corresponding to the communication signal (PE) and is zero-reset by bits contained in the first time intervals ($IT_0$) and in a second logic state ("1") which is complementary to said first logic state ("0").

## Patentansprüche

1. Verfahren zur Synchronisierung eines Kommunikationssignals (PE) in einer bidirektionalen Halbduplexverbindung, wobei das Signal (PE) erste Zeitintervalle ($IT_0$), die durch Nutzinformationen belegt sind, und zweite Zeitintervalle ($IT_1$), ohne Nutzinformationen und in einen bestimmten ersten Logikzustand ("0") umfaßt, bei dem

- in einem Ende der Verbindung ein vorbestimmtes numerisches Synchronisationsmotiv (MF) am Anfang jedes der ersten Zeitintervalle ($IT_0$) zur Übertragung des Signals in dieser Verbindung enthalten ist, umfassend wenigstens ein Bit, das einen zum ersten Logikzustand komplementären Logikzustandes aufweist, dadurch **gekennzeichnet,** daß
- das Motiv (MF) in einem anderen Ende der Verbindung zum Empfangen des Signals der Verbindung als den zweiten Zeitintervallen ($IT_1$) zugeordnet angesehen wird, mit denen es Synchronisationswörter (MVT) bildet, die im Kommunikationssignal (PE) erfaßt werden, um die Synchronisation des Signals (PE) wiederzugewinnen.

2. Vorrichtung zur Wiedergewinnung der Synchronisation zur Ausführung des Verfahrens nach Anspruch 1 und enthalten in dem das Signal empfangenden anderen Ende, umfassend Mittel (1, 2) zur Erfassung des Synchronisationsmotivs (MF) im Kommunikationssignal (PE), dadurch **gekennzeichnet,** daß sie umfaßt

- Mittel (3, 300, 301), um im Kommunikationssignal (PE) Bitfolgen im ersten Logikzustand ("0") mit Dauer wenigstens gleich der Dauer ($L_1$) der zweiten Zeitintervalle ($IT_1$) zu erfassen, und
- Mittel (302), die mit den Mitteln zum Erfassen (1, 2; 3, 300, 301) verbunden sind, um einen Synchronisationsimpuls (VT) zu bilden, wenn das Synchronisationsmotiv (MF) unmittelbar nach einer der Bitfolgen erfaßt worden ist.

3. Vorrichtung nach Anspruch 2, dadurch **gekennzeichnet,** daß sie außerdem Mittel (4) umfaßt, die mit den Mitteln zur Bildung (302) verbunden sind, um nach einer vorbestimmten Anzahl (m = 3) von aufeinanderfolgenden Erfassungsfehlern des Synchronisationswortes (MVT) eine Anomalie in der Synchronisation anzuzeigen.

4. Vorrichtung nach Anspruch 2 oder 3, dadurch **gekennzeichnet,** daß die ersten Mittel zum Erfassen einen Binärzähler (3) umfassen, der durch Impulse eines Bittaktsignals (Hb) inkrementiert wird, das dem Kommunikationssignal (PE) entspricht, und durch Bits auf Null zurückgesetzt wird, die in den ersten Zeitintervallen ($IT_0$) enthalten und in einem zum ersten Logikzustand ("0") komplementären zweiten Logikzustand ("1") sind.

EP 0 355 073 B1

# FIG.1

TR = 500 µs

IT₁ | IT₀ | IT₁ | IT₀ | IT₁

PE "1" "0"

L=1024 bits    L₁=1536 bits

MF = "1110"    MVT="00...01110"    MF="1110"

# FIG.2

DISPOSITIF DE SYNCHRONISATION

SIGNALISATION DE PERTE DE VERROUILLAGE DE TRAME

7